# FASCICULE DE BREVET EUROPEEN

(11) **EP 4 281 306 B1**
(45) Date de publication et mention de la délivrance du brevet: **19.02.2025**
(21) Numéro de dépôt: 21851825.6
(22) Date de dépôt: 14.12.2021
(51) Int. Cl.: B60K 35/10, B60K 35/28, B60W 50/14

(54) **PROCÉDÉ ET DISPOSITIF DE CONTRÔLE DE TÉMOINS D'UNE INTERFACE HOMME-MACHINE POUR VÉHICULE**
VERFAHREN UND VORRICHTUNG ZUR STEUERUNG VON INDIKATOREN EINER MENSCH-MASCHINE-SCHNITTSTELLE FÜR EIN FAHRZEUG
METHOD AND DEVICE FOR CONTROLLING INDICATORS OF A HUMAN-MACHINE INTERFACE FOR A VEHICLE

(30) Priorité: 25.01.2021 FR 2100664
(43) Date de publication de la demande: 29.11.2023
(73) Titulaire: Stellantis Auto SAS, 78300 Poissy (FR)
(72) Inventeur: TAHHAN, Aref Antoine, 78170 LA CELLE ST CLOUD (FR); TOPUZ, Seyd, 90000 BELFORT (FR); BOUKHENAISSI, Sofiane, 92110 CLICHY (FR)
(74) Mandataire: ESIP
(86) Numéro de dépôt international: PCT/FR2021/052318
(87) Numéro de publication internationale: WO 2022/157434

(56) Documents cités:
- WO-A1-2019/094843
- FR-A1- 3 091 608

## Description

### Domaine technique

L'invention concerne les procédés et dispositifs de contrôle d'un ensemble de témoins d'une interface homme-machine à afficher sur un écran d'un véhicule, notamment un véhicule automobile. L'invention concerne également un procédé et un dispositif de validation d'un niveau de sécurité associé à l'affichage de témoins de contrôle pour véhicule.

### Arrière-plan technologique

La sophistication des véhicules s'accompagne d'exigences élevées en termes de sécurité des véhicules et de leurs passagers. Les systèmes, composants et fonctions mis en œuvre dans un véhicule doivent souvent répondre à un niveau de sécurité déterminé. Ces niveaux de sécurité sont par exemple décrits dans la norme ISO 26262, ces niveaux de sécurité étant identifiés par leur niveau ASIL (de l'anglais « Automotive Safety Integrity Level » ou en français « Niveau d'intégrité de sécurité automobile »), c'est-à-dire ASIL A, B, C ou D.

Par exemple, les composants ou calculateur contrôlant le système de freinage du véhicule doivent être à un niveau ASIL très élevé, par exemple un niveau ASIL D. En cas de problème ou de défaillance du système de freinage, il est indispensable d'informer le conducteur du véhicule pour que ce dernier prenne les mesures qui s'imposent, par exemple un arrêt du véhicule et/ou une prise de rendez-vous dans un garage. Pour alerter le conducteur de la survenue d'un problème, il est connu d'afficher un témoin indiquant le problème, par exemple sur le tableau de bord. L'affichage de ce témoin est par exemple obtenu par l'activation d'une LED mettant en surbrillance une icône sur le tableau de bord, le témoin correspondant à un témoin physique dans ce cas de figure.

On connait notamment du brevet WO2019/094843 A1 des procédés perfectionnés qui facilitent une fonctionnalité de conduite autonome, comprenant notamment un contrôleur qui reçoit des entrées provenant d'un combiné et qui peut fournir des sorties perceptibles par un opérateur humain via un ou plusieurs affichages d'interface homme-machine, un avertisseur sonore, un haut-parleur et/ou d'autres moyens. En plus des informations traditionnelles telles que la vitesse, le temps et d'autres informations bien connues, l'affichage HMI peut fournir aux occupants du véhicule des informations concernant les cartes et la localisation du véhicule, la position d'autres véhicules et l'identification par le contrôleur d'objets et de leur état. Par exemple, l'affichage HMI peut avertir le passager lorsque le contrôleur a identifié la présence d'un panneau d'arrêt, d'un panneau de mise en garde ou d'un feu de signalisation en train de changer, et qu'il prend des mesures appropriées, offrant ainsi aux occupants du véhicule l'assurance que le contrôleur fonctionne comme prévu.

On connait également du brevet FR3091608 A1 un procédé et un dispositif de de mise à jour d'un logiciel d'un calculateur d'un système embarqué dans un véhicule.

Les véhicules contemporains embarquent aujourd'hui un ou plusieurs écrans sur lesquels sont affichées une ou plusieurs interfaces homme-machine, dites IHM, qui permettent au conducteur ou aux passagers d'un véhicule d'interagir avec le véhicule. Ces IHM sont aujourd'hui utilisées pour afficher certaines informations telles que la vitesse du véhicule ou encore pour afficher un ou plusieurs témoins signalant un éventuel problème. La diversité de ces IHM est très grande, chaque modèle de véhicule disposant d'une IHM particulière avec notamment une disposition particulière et/ou un graphisme particulier des éléments à afficher.

Tester la conformité du niveau de sécurité de certains témoins est indispensable. Une telle opération est cependant rendue compliquée par la grande diversité des IHM, ce qui engendre des coûts associés importants et des risques d'erreur élevés dans la sélection du test correspondant à la configuration particulière d'un véhicule.

### Résumé de l'invention

Un objet de la présente invention est d'améliorer la validation de la conformité des témoins d'un véhicule par rapport à un niveau de sécurité requis.

Un autre objet de la présente invention est d'optimiser le contrôle des témoins de sécurité d'un véhicule.

Selon un premier aspect, l'invention concerne un procédé de contrôle d'un ensemble de témoins d'une interface homme-machine à afficher sur au moins un écran d'un véhicule, l'ensemble de témoins comprenant au moins un témoin, le procédé étant mis en œuvre par un calculateur embarqué dans le véhicule et comprenant les étapes suivantes :
- réception d'une requête comprenant une première information identifiant au moins en partie le véhicule et une deuxième information identifiant l'ensemble de témoins à contrôler ;
- identification, dans une mémoire associée au calculateur, de premières données représentatives d'une configuration d'affichage de l'ensemble de témoins dans l'interface homme-machine à partir de la première information et de la deuxième information ;
- génération de deuxièmes données représentatives d'une partie d'un flux vidéo en fonction des premières données, une information de contrôle des deuxièmes données étant associée aux deuxièmes données ;
- comparaison de l'information de contrôle avec une information de contrôle de référence correspondant à la configuration, l'information de contrôle de référence étant stockée dans la mémoire ;
- détermination d'une troisième information représentative d'un état de conformité d'affichage de l'ensemble de témoins en fonction d'un résultat de la comparaison.

Selon une variante, la requête appartient à un ensemble de requête chacune identifiée par un nom d'appel déterminé conforme à une convention de nommage déterminée.

Selon une autre variante, les premières données comprennent :
- des données représentatives de localisation spatiale de chaque témoin de l'ensemble de témoins dans l'interface homme-machine ; et/ou
- des données représentatives de couleur d'affichage de chaque témoin de l'ensemble de témoins ; et/ou
- des données représentatives de dimension de chaque témoin de l'ensemble de témoins ; et/ou
- des données représentatives de résolution.

Selon une variante supplémentaire, un niveau de sécurité correspondant au niveau ASIL A est associé à chaque témoin de l'ensemble de témoins.

Selon encore une variante, les premières données sont identifiées à partir d'une table de correspondance stockée dans la mémoire, la table de correspondance comprenant une liste d'identifiants d'interfaces homme-machine, chaque identifiant d'une interface homme-machine correspondant à une unique première information d'un ensemble de premières informations.

Selon une variante additionnelle, l'information de contrôle correspond à une valeur de contrôle de redondance cyclique.

Selon une autre variante, le flux vidéo est destiné à un calculateur contrôlant le au moins un écran, les deuxièmes données correspondant à une couche supérieure d'un empilement de couches contenues dans le flux vidéo, le flux vidéo comprenant les données de l'interface homme-machine.

Selon un deuxième aspect, l'invention concerne un dispositif de contrôle d'un ensemble de témoins d'une interface homme-machine à afficher sur au moins un écran d'un véhicule, l'ensemble de témoins comprenant au moins un témoin, le dispositif comprenant une mémoire associée à un processeur configuré pour la mise en œuvre des étapes du procédé selon le premier aspect de l'invention.

Selon un troisième aspect, l'invention concerne un véhicule, par exemple de type automobile, comprenant le dispositif tel que décrit ci-dessus selon le deuxième aspect de l'invention.

Selon un quatrième aspect, l'invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, l'invention concerne un support d'enregistrement lisible par un ordinateur sur lequel est enregistré un programme d'ordinateur comprenant des instructions pour l'exécution des étapes du procédé selon le premier aspect de l'invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de l'invention ressortiront de la description des modes de réalisation non limitatifs de l'invention ci-après, en référence aux figures 1 à 4 annexées, sur lesquelles :
[Fig. 1] illustre schématiquement une interface homme-machine pour véhicule, selon un exemple de réalisation particulier de la présente invention ;
[Fig. 2] illustre un système de contrôle de l'interface homme-machine de la figure 1, selon un exemple de réalisation particulier de la présente invention ;
[Fig. 3] illustre un dispositif de contrôle de l'interface homme-machine de la figure 1, selon un exemple de réalisation particulier de la présente invention ;
[Fig. 4] illustre un organigramme des différentes étapes d'un procédé de contrôle de témoins de l'interface homme-machine de la figure 1, selon un exemple de réalisation particulier de la présente invention.

### Description des modes de réalisation

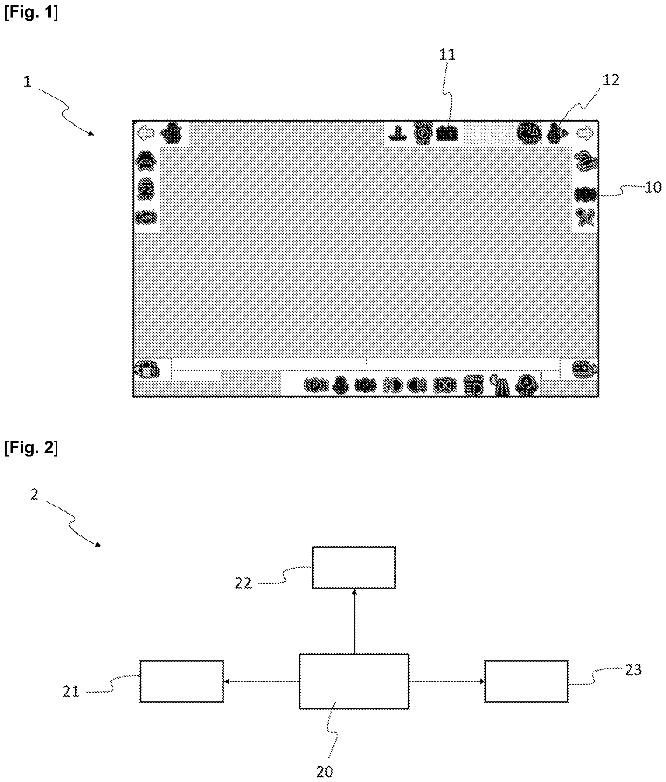

Un procédé et un dispositif de contrôle d'un ensemble de témoins d'une interface homme-machine à afficher sur au moins un écran d'un véhicule vont maintenant être décrits dans ce qui va suivre en référence conjointement aux figures 1 à 4. Des mêmes éléments sont identifiés avec des mêmes signes de référence tout au long de la description qui va suivre.

Selon un exemple particulier et non limitatif de réalisation de l'invention, le contrôle d'un ou plusieurs témoins formant un ensemble de témoins d'une interface homme-machine, dite IHM, à afficher sur au moins un écran d'un véhicule comprend la réception, par un calculateur du véhicule, d'une requête comprenant une première information identifiant au moins en partie le véhicule et une deuxième information identifiant l'ensemble de témoins à contrôler. La première information et la deuxième information sont utilisées par le calculateur pour identifier dans une mémoire des premières données associées à une configuration particulière pour l'affichage des témoins identifiés par la deuxième information. Des deuxièmes données sont ainsi générées par le calculateur en fonction des premières données identifiées, ces deuxièmes données correspondant à une partie d'un flux vidéo généré par le calculateur pour afficher l'IHM. Ces deuxièmes données sont avantageusement associées à une information de contrôle, par exemple un CRC (de l'anglais « Cyclic Redundancy Check » ou en français « Contrôle de redondance cyclique »). Cette information de contrôle est ensuite comparée à une information de contrôle de référence stockée en mémoire et associée à la configuration particulière identifiées par la première information et la deuxième information. Le résultat de la comparaison permet de déterminer une troisième information représentative d'un état de conformité d'affichage de l'ensemble de témoins. Si le résultat de la comparaison indique que l'information de contrôle correspond à l'information de contrôle de référence, alors il en est déduit que l'affichage de l'ensemble de témoins est conforme à ce qui est attendu. Sinon, si le résultat de la comparaison indique que l'information de contrôle ne correspond pas à l'information de contrôle de référence, alors il en est déduit que l'affichage de l'ensemble de témoins n'est pas conforme à ce qui est attendu, par exemple que le rendu des témoins dans l'IHM n'est pas conforme à un niveau de sécurité attendu, par exemple à un niveau ASIL A.

Un tel procédé permet à partir d'une requête de tester toute configuration d'affichage de témoins dans une IHM, la requête comprenant une première information permettant de retrouver la configuration particulière de l'IHM correspondant au véhicule et la deuxième information permettant d'identifier le ou les témoins à tester. De telles informations permettent ainsi de récupérer les informations de configuration stockées en mémoire correspondant au véhicule à tester.

Un tel procédé est avantageusement mis en œuvre dans le cadre du contrôle permettant de garantir les taux de défaillance associés au niveau ASIL A ou B des témoins, notamment des témoins de sécurité alertant le conducteur d'un véhicule d'une défaillance d'un système ou un organe du véhicule et nécessitant un arrêt du véhicule.

Un niveau d'ASIL correspond avantageusement à un objectif de défaillance à garantir (par exemple de 10-6 à 10-8 défaillances par heure) afin de protéger l'intégrité et le fonctionnement d'un système ou d'un organe du véhicule. Il existe plusieurs niveaux d'ASIL, classés selon le niveau de contraintes associé, c'est-à-dire les niveaux QM, A, B, C et D, QM correspondant au niveau le moins contraignant et D le plus contraignant.

[Fig. 1] illustre schématiquement une interface homme-machine 1 pour un véhicule, selon un exemple de réalisation particulier et non limitatif de la présente invention.

La figure 1 illustre un exemple particulier d'interface homme-machine, dite IHM, affichée sur un écran disposé dans l'habitacle d'un véhicule, par exemple un véhicule automobile. Bien entendu, le véhicule n'est pas limité à un véhicule automobile mais s'étend à tout type de véhicule embarquant un ou plusieurs écrans sur lequel ou lesquels est affichée une IHM graphique, par exemple un car, un bus, un camion, un véhicule utilitaire, c'est-à-dire à un véhicule de type véhicule terrestre motorisé.

L'IHM 1 est utilisée pour afficher un ensemble d'informations à destination du conducteur et/ou des passagers du véhicule. Ces informations comprennent selon l'exemple de la figure 1 des informations relatives à la vitesse, au niveau d'énergie restant (par exemple le niveau d'énergie dans les batteries ou le niveau d'essence dans le réservoir), le nombre de kilomètres parcourus, etc.

Parmi ces informations, l'IHM comprend en ensemble de témoins, dont au moins une partie correspond à un ensemble de témoins 10, 11, 12 dits de sécurité ou d'alerte. Un témoin correspond à une icône graphique ou à un pictogramme de couleur déterminée. Chaque témoin possède avantageusement une forme ou représentation graphique particulière et déterminée, une couleur particulière et déterminée. Certaines représentations et couleurs associées aux témoins, notamment aux témoins de sécurité ou d'alerte, sont par exemple définies dans une norme internationale telle que l'ECE R121.

Les témoins d'alerte ou de sécurité signalent chacun une panne moteur imposant un arrêt immédiat ou un danger pour les passagers du véhicule, l'affichage d'un tel témoin alertant le conducteur du véhicule de la nécessité de s'arrêter. Un niveau de sécurité correspondant au niveau dit ASIL A est avantageusement associé à chaque témoin de sécurité ou d'alerte 10, 11, 12, garantissant qu'un tel témoin est affiché lorsque le défaut ou la panne est constatée.

Chaque témoin d'alerte 10, 11, 12 appartient à un ensemble de témoins de sécurité ou d'alerte comprenant notamment :
- le témoin de charge batterie : l'affichage d'un tel témoin indique une insuffisance de la charge de la batterie résultant par exemple d'une panne de l'alternateur ;
- le témoin de pression d'huile moteur : l'affichage d'un tel témoin indique une pression insuffisante (inférieure à un seuil déterminé) ;
- le témoin de température d'huile moteur : l'affichage d'un tel témoin indique une surchauffe de l'huile moteur (température supérieure à un seuil déterminé) ;
- le témoin de température du liquide de refroidissement : l'affichage d'un tel témoin indique toute surchauffe du moteur (température supérieure à un seuil déterminé) ;
- le témoin de défaillance des freins ou du système de freinage : l'affichage d'un tel témoin indique par exemple une baisse de pression du circuit de freinage et/ou un niveau insuffisant du liquide de freinage et/ou le serrage du frein de stationnement ;
- le témoin de pression des pneumatiques : l'affichage d'un tel témoin indique une perte de pression excessive d'un ou plusieurs pneumatiques du véhicule ; et
- le témoin de ceinture de sécurité non bouclée : l'affichage d'un tel témoin indique que le conducteur et/ou un passager n'a pas bouclé sa ceinture de sécurité.

La présente invention a notamment pour objet de contrôler la conformité du niveau de sécurité (par exemple ASIL A) associé à un ou plusieurs de ces témoins de sécurité par un processus ou procédé qui sera décrit en détail ci-dessous.

Selon une variante optionnelle de réalisation, l'affichage d'un ou plusieurs témoins dits d'avertissement est en outre testé, en plus de l'affichage d'un ou plusieurs témoins d'alerte ou de sécurité mentionnés ci-dessus. Un témoin d'avertissement correspond à un indicateur signalant la panne d'un système électronique de bord ou le besoin de faire réviser rapidement un organe du véhicule, tout en laissant la possibilité de continuer à utiliser le véhicule. L'ensemble de témoins d'avertissement à contrôler comprend par exemple un ou plusieurs des témoins suivants : témoin de niveau d'huile moteur, témoin d'air bag (ou « coussin gonflable » en français), témoin de système ABS, témoin de système de correction électronique de trajectoire, témoin d'usure des plaquettes de frein, témoin du système antipatinage du véhicule, témoin de niveau de carburant, témoin de dépollution du moteur, témoin de direction assistée, témoin d'ampoule défaillante.

Une IHM telle que l'IHM 1 correspond par exemple à un empilement de couches (de l'anglais « layer »), chaque couche correspondant à l'affichage d'un ensemble d'éléments graphiques déterminés, la superposition des couches permettant d'obtenir le rendu de l'IHM. Les témoins à afficher sont avantageusement compris dans une seule et même couche, par exemple la couche supérieure de l'empilement. A titre d'exemple, l'empilement de couches comprend 5 couches numérotées de 1 à 5, la couche comprenant les témoins correspondant à la 5^{ème} couche, c'est-à-dire la couche se superposant au-dessus des autres couches.

[Fig. 2] illustre un système 2 configuré pour contrôler un ensemble de témoins à afficher dans une IHM sur un ou plusieurs écrans embarqués dans un véhicule, selon un exemple de réalisation particulier et non limitatif de la présente invention.

Le système 2 est avantageusement embarqué dans le véhicule dans lequel l'IHM décrite en regard de la figure 1 est à afficher. Le système 2 correspond par exemple à une portion du système embarqué du véhicule. Le système 2 comprend par exemple plusieurs calculateurs 20, 21, 22, 23 de type UCE (« Unité de Commande Electronique »). Une UCE est composée d'un calculateur électronique et d'un ou plusieurs logiciels embarqués qui réalisent un ou plusieurs asservissements.

Les calculateurs 20 à 23 sont avantageusement reliés en communication via une liaison filaire, par exemple un bus de données de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

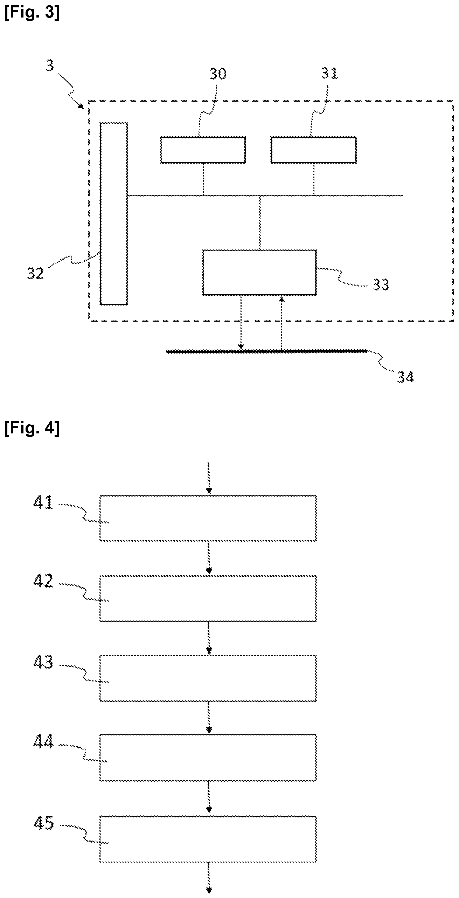

Selon l'architecture de la figure 2, le calculateur 20 correspond par exemple à un calculateur maître et chacun des calculateurs 21 à 23 correspond à un calculateur esclave du calculateur maître 20. Le calculateur 20 correspond par exemple à un calculateur en charge du système IVI (de l'anglais « In Vehicle Infotainment » ou en français « Infodivertissement dans le véhicule »), le calculateur 20 étant aussi dénommé à ce titre calculateur IVI 20. Le calculateur IVI 20 est ainsi en charge du système infodivertissement du véhicule fournissant les accès audio et vidéo à l'intérieur du véhicule, tels que l'accès à l'internet, l'accès aux informations routières, la navigation, les services de diffusion numérique et de streaming ainsi que la génération d'informations relatives au véhicule à rendre, par exemple afficher sur un écran, à destination du conducteur et/ou des passagers du véhicule par l'intermédiaire d'une IHM. Un exemple d'architecture d'un tel calculateur IVI 20 est décrit avec plus de détail en regard de la figure 3.

Le calculateur IVI 20 génère par exemple les contenus à rendre sur des périphériques embarqués dans le véhicule, tels qu'un ou plusieurs écrans d'affichage, un ou plusieurs haut-parleurs. Chacun de ces périphériques est par exemple contrôlé par un calculateur 21, 22, 23 recevant les données à rendre (diffuser ou afficher par exemple) sur le périphérique associé au calculateur concerné.

Par exemple, le calculateur 21 reçoit un flux vidéo comprenant les données représentatives de l'IHM en charge de restituer au conducteur les paramètres, données et informations relatives au véhicule, telles que notamment les témoins de sécurité ou d'alerte ayant un niveau de sécurité associé égal au niveau ASIL A. Le calculateur 21 gère alors l'affichage de l'IHM sur un ou plusieurs écrans d'affichage qu'il contrôle.

Le calculateur IVI 20 est avantageusement utilisé pour la mise en œuvre d'un processus de contrôle d'un ensemble de témoins comprenant par exemple un ou plusieurs témoins de sécurité, les opérations formant un tel processus étant décrite ci-après.

Dans une première opération, le calculateur IVI 20 reçoit une requête requérant le contrôle d'un ou plusieurs témoins formant un ensemble de témoins à tester. Un tel contrôle permet notamment de garantir un niveau de sécurité quant à l'affichage de chacun de ces témoins lorsqu'un tel affichage est requis, c'est-à-dire en cas de défaillance du système ou de l'organe associé au témoin considéré.

La requête comprend avantageusement une première information (correspondant à un premier identifiant) permettant d'identifier au moins en partie le véhicule. La première information comprise dans la requête identifie par exemple le numéro de projet du véhicule, notamment en regard de la configuration de l'IHM quant à l'affichage des témoins, notamment des témoins de sécurité ou d'alerte.

La requête comprend également une deuxième information permettant d'identifier quel est ou quels sont les témoins à contrôler. Cette deuxième information correspond par exemple à un masque de témoins à tester. Cette deuxième information prend par exemple la forme d'une liste de témoins avec pour chaque témoin une information indiquant si le témoin associé est à contrôler ou non. Cette information correspond par exemple à un bit prenant la valeur 0 lorsque le témoin associé n'est pas à contrôler et la valeur 1 lorsque le témoin associé est à contrôler.

La requête est par exemple émise par un dispositif de calcul distant (par exemple un ordinateur de diagnostic ou un ordinateur de supervision) et transmise au calculateur IVI 20 via une liaison filaire reliant le dispositif de calcul distant au calculateur IVI 20.

Selon un exemple de mise en œuvre particulier, la requête correspond à une trame de données comprenant les informations suivantes :
- un en-tête de trame, par exemple codé sur 4 octets, comprenant par exemple des informations telles que la longueur de la trame, le type de la trame. Selon une variante de réalisation, l'en-tête comprend également un ensemble d'informations permettant de chercher et trouver la trame parmi une liste de trames stockées en mémoire du dispositif de calcul distant. Ces informations comprennent par exemple un identifiant du projet du véhicule permettant d'identifier le type, le modèle ou la version du véhicule ; et une ou plusieurs des informations suivantes : une information indiquant si le calculateur 21 est supervisé ou non par le calculateur IVI 20 ; et/ou une information indiquant le nombre de témoins physiques (par exemple affichés via des LEDs) arrangés en dehors de l'IHM ; et/ou une information relative au type de frein à main ; et/ou le type du système de direction du véhicule ; et/ou les caractéristiques de l'écran d'affichage utilisé pour afficher l'IHM 1, par exemple la définition de l'écran ;
- un premier identifiant, par exemple codé sur 1, 2, 3 ou 4 octets, d'une table stockée dans une mémoire du calculateur 20 ou associée au calculateur 20 et comprenant les paramètres d'affichage de l'IHM 1, notamment des témoins disponibles dans l'IHM 1, ce premier identifiant correspondant au moins en partie à la première information identifiant au moins en partie le véhicule ;
- selon une variante optionnelle, un deuxième identifiant, par exemple codé sur 1, 2, 3 ou 4 octets, d'une version de l'IHM affichée dans le véhicule table stockée dans une mémoire du calculateur 20 ou associée au calculateur 20, ce deuxième identifiant correspondant au moins en partie à la première information identifiant au moins en partie le véhicule en complément du premier identifiant ;
- un masque de sécurité codé par exemple sur 2 octets, à chaque bit étant associé un témoin de sécurité unique, la valeur prise par le bit indiquant si le témoin de sécurité associé est à contrôler ou non. Le masque de sécurité comprend par exemple une liste paramétrable comprenant un nombre déterminé de témoins de sécurité (par exemple 13, 14, 15 ou 16 témoins), la valeur du bit associé à chaque témoin indiquant si le témoin associé est à contrôler ou non (0 pour une absence de contrôle, 1 pour un contrôle à réaliser). Ce masque de sécurité correspond à la deuxième information.

Le dispositif de calcul distant stocke par exemple une liste déterminée de requêtes, chaque requête étant identifiée par des informations par exemple comprises dans l'en-tête.

Une requête particulière est appelée par un utilisateur, via une IHM, par l'entrée d'un nom d'appel suivant une règle de nommage déterminé. Par exemple, une requête est appelée en entrant un numéro de version de la requête, suivi du nom du projet du véhicule, suivi par exemple d'une indication relative à la supervision (par exemple « esclave » dans le cas d'un calculateur 21 supervisé par le calculateur 20), suivi par exemple du nombre de témoins physiques dans le véhicule, suivi par exemple du type de système de freinage. Un exemple de nom d'appel d'une requête correspond à :
'C0_D4x_Slave_16Automatic'

Avec C0 la version de la requête, D4x l'identifiant du projet du véhicule, « Slave » (ou « esclave » en français) pour indiquer que le calculateur 21 est supervisé, 16 le nombre de témoins physiques et « Automatic » (ou « automatique » en français) le type de frein à main.

Les informations permettant d'appeler une requête sont fournies selon une hiérarchie en commençant avec les informations ayant l'importance la plus forte. Ainsi, si une information de niveau hiérarchique plus élevé comprend les informations sur les informations de niveau hiérarchique inférieur, le nom d'appel de la requête se finit avec l'information de niveau hiérarchique plus élevé qui comprend les informations sur les informations de niveau hiérarchique inférieur.

L'utilisation d'une convention de nommage déterminée et comprenant des informations claires sur la dénomination du projet véhicule par exemple permet de limiter les erreurs humaines relatives au test à lancer pour contrôler les témoins.

Dans une deuxième opération, le calculateur IVI 20 ayant reçu la requête interprète ou décode cette requête pour extraire la première information et la deuxième information. La première information et la deuxième information sont utilisées par le calculateur pour identifier dans une mémoire du calculateur 20 (ou associée au calculateur 20) un ensemble de premières données relatives à la configuration d'affichage des témoins à contrôler. La première information permet par exemple d'identifier le registre ou la table dans lequel ou laquelle sont stockées les paramètres et données d'affichage de l'IHM correspondant au véhicule identifié dans la requête.

Le calculateur 20 comprend avantageusement en mémoire un ensemble de paramètres / données d'affichage pour chaque type ou version d'IHM de l'ensemble des véhicules dans lesquels le calculateur 20 est mis en œuvre ou embarqué, chaque ensemble de paramètres / données d'affichage étant identifiable via un identifiant unique (correspondant à la première information de la requête reçue à la première opération).

La deuxième information permet de ne sélectionner que les témoins à contrôler parmi l'ensemble des témoins disponibles et affichables dans l'IHM.

Les premières données identifiées via la première information et la deuxième information comprennent par exemple :
- les données de position de chaque témoin à contrôler, par exemple les coordonnées de chaque pixel de chaque témoin à contrôler ;
- les données relatives aux pixels formant chaque témoin, par exemple des données de couleur, par exemple au format RGB (de l'anglais « Red, Green, Blue » ou en français « Rouge, vert, bleu »), chaque canal couleur étant par exemple codé sur 8 bits ;
- les données relatives à la résolution de l'IHM.

Dans une troisième opération, le calculateur 20 génère une partie du flux vidéo correspondant à l'IHM à afficher à partir des premières données récupérées à la deuxième opération. La partie du flux vidéo correspond avantageusement aux données, appelées deuxièmes données, du flux vidéo correspondant à la couche de l'IHM comprenant les témoins à contrôler identifiés par la deuxième information. Ces deuxièmes données comprennent par exemple les données associées aux pixels des témoins à afficher, c'est-à-dire les numéros de lignes et colonnes de chaque pixel associés aux données de couleur.

Le calculateur IVI 20 détermine avantageusement une information de contrôle à partir de ces deuxièmes données, l'information de contrôle permettant de tester le contenu de la ou les trames comprenant les deuxièmes données, par exemple pour vérifier l'intégrité des deuxièmes données générées et transmises.

L'information de contrôle correspond par exemple à une valeur de CRC (de l'anglais « Cyclic Redundancy Check » ou en français « contrôle de redondance cyclique ») calculée à partir des deuxièmes données ou à une valeur dite somme de contrôle (de l'anglais « checksum »).

Cette information de contrôle est avantageusement attachée aux deuxièmes données générées pour être transmise avec les deuxièmes données par le calculateur IVI 20, par exemple à destination du calculateur 21 pour que ce dernier génère la couche de l'IHM contenant les témoins à afficher.

Dans une quatrième opération, le calculateur IVI 20 compare l'information de contrôle générée à la troisième opération à une information de contrôle de référence correspondant à la configuration d'affichage particulière des témoins à contrôler. Cette information de contrôle de référence est de même nature que l'information de contrôle attachée aux deuxièmes données, c'est-à-dire que l'information de contrôle de référence correspond à une valeur de CRC si l'information de contrôle est un CRC et l'information de contrôle de référence correspond à une somme de contrôle si l'information de contrôle est une somme de contrôle.

Cette information de contrôle de référence est par exemple stockée en mémoire du calculateur 20, une information de contrôle de référence étant associée à chaque configuration d'affichage possible d'un ensemble de témoins dans l'IHM. Pour chaque type ou version d'IHM dont les paramètres sont stockés en mémoire de l'IHM, une pluralité d'informations de contrôle de référence sont associées, avec une information de contrôle de référence pour chaque combinaison possible d'affichage de témoin(s). Ces informations de contrôle de référence sont par exemple stockées dans une table de correspondance, dite LUT (de l'anglais « Look-Up Table »), à chaque information de contrôle de référence étant associé un identifiant dans la table, cet identifiant correspondant à une configuration particulière d'affichage d'un ou plusieurs témoins.

La comparaison est effectuée par le calculateur IVI 20, c'est-à-dire par un bloc, module ou un élément (par exemple logiciel) du calculateur 20 recevant le flux vidéo transmis par le bloc du calculateur 20 en charge de la génération du flux vidéo, ce flux vidéo étant destiné au calculateur 21. La comparaison est ainsi effectuée par le calculateur IVI 20 avant que la partie du flux vidéo comprenant les deuxièmes données et l'information de contrôle associée ne soit transmise au calculateur 21. La comparaison est effectuée en sortie du calculateur 20, par un bloc, module ou élément dédié du calculateur 20.

Dans une cinquième opération, le bloc, module ou élément du calculateur 20 ayant effectué la comparaison de la quatrième opération détermine une troisième information représentative d'un état de conformité d'affichage de l'ensemble de témoins identifiés par la deuxième information en fonction du résultat de la comparaison.

La troisième information correspond par exemple à une valeur binaire. La troisième information prend par exemple une première valeur (par exemple 0) indiquant que l'affichage de l'ensemble de témoins n'est pas conforme à ce qui est attendu ou à ce qu'il devrait être, c'est-à-dire qu'une erreur est survenue dans la trame comprenant les deuxièmes données. La troisième information prend la première valeur lorsque le résultat de la comparaison indique que l'information de contrôle est différente de l'information de contrôle de référence.

La troisième information prend par exemple une deuxième valeur (par exemple 1) indiquant que l'affichage de l'ensemble de témoins est conforme à ce qui est attendu ou à ce qu'il devrait être, c'est-à-dire que la probabilité qu'une erreur soit survenue dans la trame comprenant les deuxièmes données est très faible, voire nulle. La troisième information prend la deuxième valeur lorsque le résultat de la comparaison indique que l'information de contrôle est identique à l'information de contrôle de référence.

Le calcul ou la détermination de la troisième information permet de vérifier que le fonctionnement des témoins de sécurité est conforme au niveau de sécurité attendu, par exemple ASIL A.

Un tel processus a l'avantage d'être générique, c'est-à-dire qu'il s'applique de manière identique à toute configuration d'affichage requise par la requête. Dans un tel processus, seul le contenu de la requête diffère d'une requête à une autre, permettant de tester toute configuration d'affichage de témoins pour toute version d'IHM (qui dépend du véhicule notamment). Cela permet ainsi de gérer la grande diversité qui existe dans la configuration des IHM, le contrôle du niveau de sécurité étant assuré par un bloc, module ou élément générique du calculateur IVI 20, permettant un gain de temps et réduisant le risque d'erreur associé à une sélection erronée d'un module de test ne correspondant pas à la configuration testée.

[Fig. 3] illustre schématiquement un dispositif configuré pour le contrôle d'un ensemble de témoins d'une IHM à afficher sur un ou plusieurs écrans d'un véhicule, selon un exemple de réalisation particulier et non limitatif de la présente invention. Le dispositif 3 correspond par exemple au calculateur IVI 20 de la figure 2.

Le dispositif 3 est par exemple configuré pour la mise en œuvre des opérations décrites en regard de la figure 2 et/ou des étapes du procédé décrit en regard de la figure 4. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels. Selon différents modes de réalisation particuliers, le dispositif 3 est couplé en communication avec d'autres dispositifs ou systèmes similaires, par exemple les calculateurs 21, 22, 23 et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Le dispositif 3 comprend un (ou plusieurs) processeur(s) 30 configurés pour exécuter des instructions pour la réalisation des étapes du procédé et/ou pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31 correspondant par exemple une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 31.

Selon un mode de réalisation particulier et non limitatif, le dispositif 3 comprend un bloc 32 d'éléments d'interface pour communiquer avec des dispositifs externes, par exemple un dispositif de calcul distant. Les éléments d'interface du bloc 32 comprennent une ou plusieurs des interfaces suivantes :
- interface radiofréquence RF, par exemple de type Bluetooth^{®} ou Wi-Fi^{®}, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre mode de réalisation particulier, le dispositif 3 comprend une interface de communication 33 qui permet d'établir une communication avec d'autres dispositifs (tels que d'autres calculateurs du système embarqué) via un canal de communication 34. L'interface de communication 33 correspond par exemple à un transmetteur configuré pour transmettre et recevoir des informations et/ou des données via le canal de communication 34. L'interface de communication 33 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

[Fig. 4] illustre un organigramme des différentes étapes d'un procédé de contrôle d'un ensemble de témoins d'une IHM à afficher sur un ou plusieurs écrans d'un véhicule, selon un exemple de réalisation particulier et non limitatif de la présente invention. Le procédé est par exemple mis en œuvre par le calculateur 20 embarqué dans le véhicule ou par le dispositif 3 de la figure 3.

Dans une première étape 41, une requête comprenant une première information identifiant au moins en partie le véhicule et une deuxième information identifiant l'ensemble de témoins à contrôler est reçue par le calculateur.

Dans une deuxième étape 42, des premières données représentatives d'une configuration d'affichage de l'ensemble de témoins dans l'interface homme-machine sont identifiées dans une mémoire associée au calculateur à partir de la première information et de la deuxième information.

Dans une troisième étape 43, des deuxièmes données représentatives d'une partie d'un flux vidéo sont générées en fonction des premières données, une information de contrôle des deuxièmes données étant associée aux deuxièmes données.

Dans une quatrième étape 44, l'information de contrôle est comparée avec une information de contrôle de référence correspondant à la configuration d'affichage représentée par les premières données, l'information de contrôle de référence étant stockée dans la mémoire.

Dans une cinquième étape 45, une troisième information représentative d'un état de conformité d'affichage de l'ensemble de témoins en fonction est déterminée en fonction d'un résultat de la comparaison. Ainsi, si le résultat de la comparaison indique que l'information de contrôle correspond à l'information de contrôle de référence, alors la troisième information est représentative d'un état conforme, c'est-à-dire que l'affichage de l'ensemble de témoins est correct. Sinon, si le résultat de la comparaison indique que l'information de contrôle ne correspond pas à l'information de contrôle de référence, alors la troisième information est représentative d'un état non conforme, c'est-à-dire que l'affichage de l'ensemble de témoins est incorrect ou erroné.

Selon une variante de réalisation, les variantes et exemples des opérations décrits en relation avec la figure 2 s'appliquent aux étapes du procédé de la figure 4.

Bien entendu, l'invention ne se limite pas aux modes de réalisation décrits ci-avant mais s'étend à un procédé de contrôle d'un niveau de sécurité associé à un ensemble de témoins à afficher dans un véhicule, ainsi qu'au dispositif configuré pour la mise en œuvre d'un tel procédé.

L'invention concerne également un véhicule, par exemple automobile ou plus généralement un véhicule autonome à moteur terrestre, comprenant le système 2 de la figure 2 et/ou le dispositif 3 de la figure 3.

## Revendications

1. Procédé de contrôle d'un ensemble de témoins (10, 11, 12) d'une interface homme-machine (1) à afficher sur au moins un écran d'un véhicule, ledit ensemble de témoins (10, 11, 12) comprenant au moins un témoin, ledit procédé étant mis en œuvre par un calculateur (20) embarqué dans ledit véhicule et comprenant les étapes suivantes :
- réception (41) d'une requête comprenant une première information identifiant au moins en partie ledit véhicule et une deuxième information identifiant ledit ensemble de témoins (10, 11, 12) à contrôler ;
- identification (42), dans une mémoire associée audit calculateur, de premières données représentatives d'une configuration d'affichage dudit ensemble de témoins (10, 11, 12) dans ladite interface homme-machine (1) à partir de ladite première information et de ladite deuxième information ;
- génération (43) de deuxièmes données représentatives d'une partie d'un flux vidéo en fonction desdites premières données, une information de contrôle desdites deuxièmes données étant associée auxdites deuxièmes données ;
- comparaison (44) de ladite information de contrôle avec une information de contrôle de référence correspondant à ladite configuration, ladite information de contrôle de référence étant stockée dans ladite mémoire ;
- détermination (45) d'une troisième information représentative d'un état de conformité d'affichage dudit ensemble de témoins (10, 11, 12) en fonction d'un résultat de ladite comparaison (44).

2. Procédé selon la revendication 1, pour lequel ladite requête appartient à un ensemble de requête chacune identifiée par un nom d'appel déterminé conforme à une convention de nommage déterminée.

3. Procédé selon la revendication 1 ou 2, pour lequel lesdites premières données comprennent :
- des données représentatives de localisation spatiale de chaque témoin dudit ensemble de témoins (10, 11, 12) dans l'interface homme-machine (1) ; et/ou
- des données représentatives de couleur d'affichage de chaque témoin dudit ensemble de témoins (10, 11, 12) ; et/ou
- des données représentatives de dimension de chaque témoin dudit ensemble de témoins (10, 11, 12) ; et/ou
- des données représentatives de résolution.

4. Procédé selon l'une des revendications 1 à 3, pour lequel un niveau de sécurité correspondant au niveau ASIL A est associé à chaque témoin dudit ensemble de témoins (10, 11, 12).

5. Procédé selon l'une des revendications 1 à 4, pour lequel lesdites premières données sont identifiées à partir d'une table de correspondance stockée dans ladite mémoire, ladite table de correspondance comprenant une liste d'identifiants d'interfaces homme-machine, chaque identifiant d'une interface homme-machine correspondant à une unique première information d'un ensemble de premières informations.

6. Procédé selon l'une des revendications 1 à 5, pour lequel ladite information de contrôle correspond à une valeur de contrôle de redondance cyclique.

7. Procédé selon l'une des revendications 1 à 6, pour lequel ledit flux vidéo est destiné à un calculateur (21) contrôlant ledit au moins un écran, lesdites deuxièmes données correspondant à une couche supérieure d'un empilement de couches contenues dans ledit flux vidéo, ledit flux vidéo comprenant les données de ladite interface homme-machine.

8. Dispositif (3) de contrôle d'un ensemble de témoins d'une interface homme-machine à afficher sur au moins un écran d'un véhicule, ledit ensemble de témoins comprenant au moins un témoin, ledit dispositif (3) comprenant une mémoire (31) associée à au moins un processeur (30) configuré pour la mise en œuvre des étapes du procédé selon l'une quelconque des revendications 1 à 7.

9. Véhicule comprenant le dispositif (3) selon la revendication 8.

10. Produit programme d'ordinateur comportant des instructions adaptées pour l'exécution des étapes du procédé selon l'une des revendications 1 à 7, lorsque le programme d'ordinateur est exécuté par au moins un processeur.

## Patentansprüche

1. Verfahren zum Überwachen einer Gruppe von Kontrollleuchten (10, 11, 12) einer Mensch-Maschine-Schnittstelle (1), die auf mindestens einem Bildschirm eines Fahrzeugs angezeigt werden soll, wobei die Gruppe von Kontrollleuchten (10, 11, 12) mindestens eine Kontrollleuchte umfasst, wobei das Verfahren durch einen in das Fahrzeug eingebauten Rechner (20) durchgeführt wird und die folgenden Schritte umfasst:
- Empfang (41) einer Anfrage, die eine erste Information, die das Fahrzeug zumindest teilweise identifiziert, und eine zweite Information, die die zu überprüfende Gruppe von Zeugen (10, 11, 12) identifiziert, enthält;
- Identifizierung (42) von ersten Daten, die eine Anzeigekonfiguration der Gruppe von Kontrollleuchten (10, 11, 12) in der Mensch-Maschine-Schnittstelle (1) darstellen, in einem Speicher, der mit dem Rechner verbunden ist, aus der ersten Information und der zweiten Information;
- Erzeugung (43) von zweiten Daten, die einen Teil eines Videostroms darstellen, auf der Grundlage der ersten Daten, wobei den zweiten Daten eine Steuerinformation der zweiten Daten zugeordnet ist;
- Vergleich (44) der Steuerinformation mit einer Referenzsteuerinformation entsprechend der Konfiguration, wobei die Referenzsteuerinformation in dem Speicher gespeichert ist;
- Bestimmung (45) einer dritten Information, die für einen Anzeigenkonformitätszustand der Kontrollgruppe (10, 11, 12) repräsentativ ist, in Abhängigkeit von einem Ergebnis des Vergleichs (44).

2. Verfahren nach Anspruch 1, bei dem die Anforderung zu einem Satz von Anforderungen gehört, die jeweils durch einen bestimmten Anrufnamen gemäß einer bestimmten Benennungskonvention identifiziert werden.

3. Verfahren nach Anspruch 1 oder 2, wobei die ersten Daten umfassen:
- repräsentative Daten zur räumlichen Lage jeder Kontrollleuchte dieser Kontrollgruppe (10, 11, 12) in der Mensch-Maschine-Schnittstelle (1) und/oder
- repräsentative Daten für die Anzeigefarbe jeder Kontrollleuchte dieser Kontrollgruppe (10, 11, 12) und/oder
- repräsentative Größendaten jeder Kontrollgruppe (10, 11, 12) und/oder
- repräsentative Auflösungsdaten.

4. Verfahren nach einem der Ansprüche 1 bis 3, bei dem jeder Kontrollleuchte der Gruppe von Kontrollen (10, 11, 12) ein dem ASIL-A-Niveau entsprechender Sicherheitsgrad zugeordnet wird.

5. Verfahren nach einem der Ansprüche 1 bis 4, bei dem die ersten Daten aus einer in dem Speicher gespeicherten Entsprechungstabelle identifiziert werden, wobei die Entsprechungstabelle eine Liste von Mensch-Maschine-Schnittstellenkennungen umfasst, wobei jede Kennung einer Mensch-Maschine-Schnittstelle einer einzigen ersten Information eines Satzes erster Informationen entspricht.

6. Verfahren nach einem der Ansprüche 1 bis 5, bei dem die Steuerinformation einem zyklischen Redundanzprüfwert entspricht.

7. Verfahren nach einem der Ansprüche 1 bis 6, bei dem der Videostrom für einen Rechner (21) bestimmt ist, der den mindestens einen Bildschirm steuert, wobei die zweiten Daten einer oberen Schicht eines Stapels von Schichten entsprechen, die in dem Videostrom enthalten sind, wobei der Videostrom Daten der Mensch-Maschine-Schnittstelle umfasst.

8. Vorrichtung (3) zum Überwachen einer Gruppe von Kontrollleuchten einer Mensch-Maschine-Schnittstelle, die auf mindestens einem Bildschirm eines Fahrzeugs angezeigt werden soll, wobei die Gruppe von Kontrollleuchten mindestens eine Kontrollleuchte umfasst, wobei die Vorrichtung (3) einen Speicher (31) umfasst, der mindestens einem Prozessor (30) zugeordnet ist, der zur Durchführung der Schritte des Verfahrens nach einem der Ansprüche 1 bis 7 konfiguriert ist.

9. Fahrzeug mit der Vorrichtung (3) nach Anspruch 8.

10. Computerprogrammprodukt mit Anweisungen, die zur Ausführung der Schritte des Verfahrens nach einem der Ansprüche 1 bis 7 geeignet sind, wenn das Computerprogramm von mindestens einem Prozessor ausgeführt wird.

## Claims

1. Method for controlling a set of tell-tales (10, 11, 12) of a man-machine interface (1) to be displayed on at least one screen of a vehicle, said set of tell-tales (10, 11, 12) comprising at least one tell-tale, said method being implemented by a computer (20) on board said vehicle and comprising the following steps:
- receiving (41) a request comprising a first piece of information identifying at least in part said vehicle and a second piece of information identifying said set of witnesses (10, 11, 12) to be checked;
identifying (42), in a memory associated with said computer, first data representative of a display configuration of said set of indicators (10, 11, 12) in said human-machine interface (1) on the basis of said first information and said second information;
generating (43) second data representative of a part of a video stream as a function of said first data, a control information item of said second data being associated with said second data;
comparing (44) said control information with reference control information corresponding to said configuration, said reference control information being stored in said memory;
- determination (45) of a third item of information representative of a display conformity status of said set of indicators (10, 11, 12) according to a result of said comparison (44).

2. The method according to claim 1, wherein said request belongs to a set of requests each identified by a determined call name in accordance with a determined naming convention.

3. The method according to claim 1 or 2, wherein said first data comprises:
- representative spatial location data of each control of said set of controls (10, 11, 12) in the human-machine interface (1); and/or
- representative display color data of each tell-tale of said set of tell-tales (10, 11, 12); and/or
representative dimension data of each control of said set of controls (10, 11, 12); and/or
- representative resolution data.

4. Method according to one of claims 1 to 3, for which a security level corresponding to the ASIL A level is associated with each control of the said set of controls (10, 11, 12).

5. Method according to one of claims 1 to 4, for which the said first data are identified from a correspondence table stored in the said memory, the said correspondence table comprising a list of identifiers of human-machine interfaces, each identifier of a human-machine interface corresponding to a single first piece of information of a set of first pieces of information.

6. Method according to one of claims 1 to 5, for which the said control information corresponds to a cyclic redundancy control value.

7. Method according to one of claims 1 to 6, for which the said video stream is intended for a computer (21) controlling the said at least one screen, the said second data corresponding to an upper layer of a stack of layers contained in the said video stream, the said video stream comprising the data of the said man-machine interface.

8. Device (3) for controlling a set of tell-tales of a human-machine interface to be displayed on at least one screen of a vehicle, said set of tell-tales comprising at least one tell-tale, said device (3) comprising a memory (31) associated with at least one processor (30) configured for implementing the steps of the method according to any one of claims 1 to 7.

9. Vehicle comprising the device (3) according to claim 8.

10. A computer program product comprising instructions suitable for executing the steps of the method according to one of claims 1 to 7, when the computer program is executed by at least one processor.
